(19) Europäisches Patentamt / European Patent Office / Office européen des brevets

(11) **EP 3 230 747 B1**

(12) **FASCICULE DE BREVET EUROPEEN**

(45) Date de publication et mention de la délivrance du brevet:
**19.07.2023 Bulletin 2023/29**

(21) Numéro de dépôt: **15818011.7**

(22) Date de dépôt: **11.12.2015**

(51) Classification Internationale des Brevets (IPC):
**G01N 15/10** *(2006.01)*      **G01N 15/14** *(2006.01)*

(52) Classification Coopérative des Brevets (CPC):
**G01N 15/1459;** G01N 2015/1006;
G01N 2015/1402; G01N 2015/1488

(86) Numéro de dépôt international:
**PCT/FR2015/053452**

(87) Numéro de publication internationale:
**WO 2016/092234 (16.06.2016 Gazette 2016/24)**

(54) **CARACTÉRISATION ET REPRODUCTION D'UN JUGEMENT D'EXPERT POUR UNE CLASSIFICATION BINAIRE**

CHARAKTERISIERUNG UND WIEDERGABE EINES SACHVERSTÄNDIGENURTEILS FÜR EINE BINÄRE KLASSIFIKATION

CHARACTERIZATION AND REPRODUCTION OF AN EXPERT JUDGEMENT FOR A BINARY CLASSIFICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462315**

(43) Date de publication de la demande:
**18.10.2017 Bulletin 2017/42**

(73) Titulaire: **Commissariat à l'énergie atomique et aux énergies alternatives 75015 Paris (FR)**

(72) Inventeurs:
• **GARNIER, Josselin**
**75013 Paris (FR)**
• **POGGI, Françoise**
**78000 Versailles (FR)**
• **DEFAUX, Gilles**
**91610 Ballancourt sur Essonne (FR)**
• **COSMA, Antonio**
**91370 Verrieres le Buisson (FR)**
• **QUACH, Robert**
**94220 Charenton Le Pont (FR)**

(74) Mandataire: **Santarelli Tour Trinity 1 bis Esplanade de la Défense 92035 Paris La Défense Cedex (FR)**

(56) Documents cités:
**US-A1- 2011 021 368     US-A1- 2014 357 505**

• **D. T. TEACHEY ET AL: "Unmasking Evans syndrome: T-cell phenotype and apoptotic response reveal autoimmune lymphoproliferative syndrome (ALPS)", BLOOD, vol. 105, no. 6, 15 mars 2005 (2005-03-15), pages 2443-2448, XP055210083, ISSN: 0006-4971, DOI: 10.1182/blood-2004-09-3542**
• **KEELY G. MCDONALD ET AL: "CC Chemokine Receptor 6 Expression by B Lymphocytes Is Essential for the Development of Isolated Lymphoid Follicles", THE AMERICAN JOURNAL OF PATHOLOGY, vol. 170, no. 4, 1 avril 2007 (2007-04-01), pages 1229-1240, XP055210168, ISSN: 0002-9440, DOI: 10.2353/ajpath.2007.060817**

**Description**

La présente demande concerne le domaine de l'analyse par cytométrie de flux, et plus particulièrement un procédé d'analyse automatisé pour évaluer la quantité et le type de cellules répondant à un ou des marqueur(s) spécifique(s).

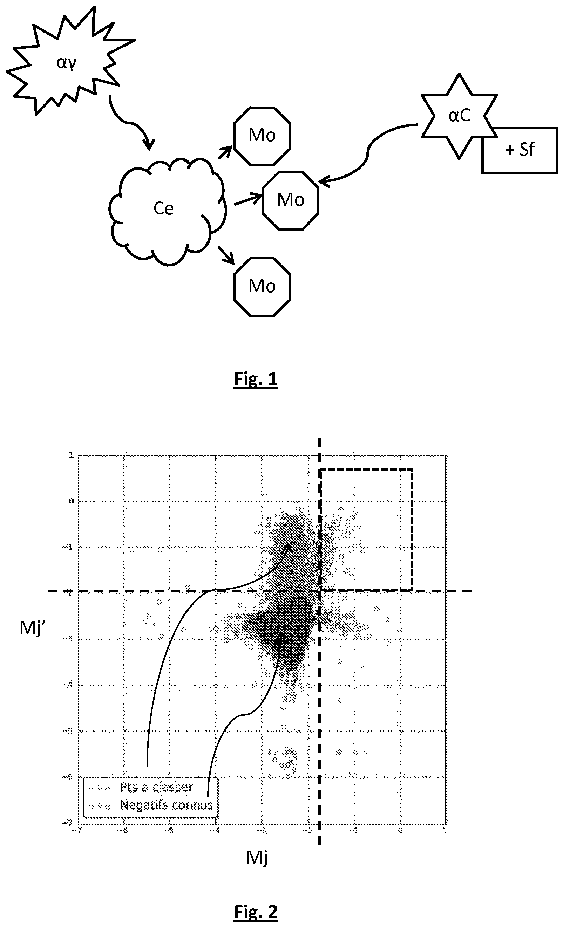

Avantageusement, cette méthode est conçue pour des essais de marquage de cytokine intracellulaire ou « Intracellular Cytokine Staining » (ICS). Ce type d'essais est d'habitude réalisé sur des échantillons de sang incubés avec des antigènes ($\alpha\gamma$) dérivés de virus, de bactéries ou de cellules cancéreuses. Après cette incubation, les cellules (Ce) capables de reconnaître les antigènes ($\alpha\gamma$), commencent à produire des molécules (Mo) différentes (usuellement des cytokines) qui sont détectées au moyen d'anticorps ($\alpha$C). Chaque anticorps ($\alpha$C) est spécifique à une molécule (Mo) donnée et est couplé à une sonde fluorescente (Sf) donnée. Ce mécanisme est schématisé sur la figure 1. Ainsi, l'analyse de la fluorescence associée à une cellule permet d'identifier quelles molécules ont été produites par cette cellule. Un courant fluide et un rayon laser sont les composants principaux d'un cytomètre de flux, instrument capable de lire la fluorescence associée à chaque cellule. Les cytomètres de flux peuvent aujourd'hui détecter jusqu'à dix-huit sondes fluorescentes par cellule.

Un anticorps couplé à une sonde fluorescente forme ainsi un marqueur, noté (Mj), pour une molécule correspondant à un antigène donné.

En ICS une cellule (Ce) est déclarée positive si elle a produit en quantité « détectable », c'est-à-dire en quantité supérieure à un seuil prédéterminé, au moins une molécule (Mo) d'intérêt. Les méthodes utilisées couramment pour identifier les cellules « positives », donc réagissant à au moins l'un des marqueurs, reposent sur le jugement visuel de l'expert. L'ensemble des données d'un échantillon à analyser peut en effet se représenter sous la forme d'un nuage de points, dans un espace multidimensionnel, de dimension donnée par le nombre de marqueurs. Chaque point correspond à une cellule et est composé des expressions de tous les marqueurs pour cette cellule. Comme l'illustre la figure 2, l'utilisateur, c'est-à-dire généralement l'expert, visualise des coupes bidimensionnelles d'un des marqueurs (Mj) par rapport à un autre (Mj') dans cet espace multidimensionnel et se réfère à un échantillon dit « de référence » (c'est-à-dire un échantillon de négatifs connus), avant incubation, dans lequel toutes les cellules sont négatives. L'expert dessine alors manuellement des intervalles de sélection autour de ce qu'il juge être des cellules positives, c'est-à-dire qui se démarquent visuellement du nuage de points le long de l'un ou l'autre des 2 axes, et donc de l'un ou l'autre des 2 marqueurs représentés. Ceci est par exemple représenté par le contour en pointillés sur la figure 2.

Un inconvénient de cette procédure est qu'elle est subjective et rend les résultats de différents utilisateurs ou laboratoires difficiles à comparer. En outre, une telle procédure est difficilement reproductible.

Les documents US 2014/357505, D. T. TEACHEY et al., "Unmasking Evans syndrome: T-cell phenotype and apoptotic response reveal autoimmune lymphoproliferative syndrome (ALPS)", (BLOOD, (20050315), vol. 105, no. 6, pages 2443 - 2448), ou encore KEELY G. MCDONALD et al., "CC Chemokine Receptor 6 Expression by B Lymphocytes Is Essential for the Development of Isolated Lymphoid Follicles", (THE AMERICAN JOURNAL OF PATHOLOGY, (20070401), vol. 170, no. 4, pages 1229 - 1240) décrivent par exemple des procédés d'analyse de cellules, qui ne sont adaptés qu'à une ou deux dimensions et où des seuils sont déterminés manuellement.

Pour résoudre au moins en partie les inconvénients précités, la présente demande a pour objet de proposer un procédé d'analyse automatisé qui permette notamment de rendre robustes et reproductibles les analyses des réponses en fluorescence obtenues par cytométrie de flux.

A cet effet, est proposé, selon un premier aspect, un procédé d'analyse de cellules d'un échantillon réagissant à au moins un marqueur spécifique, en particulier à au moins deux marqueurs spécifiques, voire de manière générale à d marqueurs spécifiques avec $d \geq 2$ et même d > 2, par exemple d $\geq$ 10, voire d $\geq$ 20, voire d $\geq$ 50, comportant :

- une étape de fourniture d'un échantillon de référence et d'un échantillon à analyser ;
- une étape de fourniture d'un ensemble ($E^+$) de cellules déclarées positives par un expert parmi les cellules de l'échantillon à analyser ;
- une étape de détermination d'un coefficient vectoriel ($\Theta$) à partir de l'échantillon à analyser et de l'ensemble ($E^+$) ;
- une étape de détermination d'au moins un ensemble de cellules positives dans l'échantillon de référence en fonction du coefficient vectoriel ($\Theta$) ; et
- une étape de calcul d'un taux de faux positifs dans l'échantillon de référence ($\alpha$) à partir du nombre de cellules positives de l'échantillon de référence.

Est également proposé, selon un deuxième aspect, un procédé d'analyse de cellules d'un échantillon réagissant à au moins un marqueur spécifique, en particulier à au moins deux marqueurs spécifiques, voire de manière générale à *d* marqueurs spécifiques avec *d* $\geq$ 2 et même *d* > 2, par exemple *d* $\geq$ 10, voire *d* $\geq$ 20, voire *d* $\geq$ 50, comportant :

- Une étape de fourniture d'un échantillon de référence et d'un échantillon à analyser ;

- Une étape de fourniture d'un taux de faux positifs ($\alpha$) dans l'échantillon de référence ;
- une étape de détermination d'un coefficient vectoriel ($\Theta$) à partir de l'échantillon de référence et du taux de faux positifs ($\alpha$) ; et
- une étape de détermination d'au moins un ensemble ($S^+$) de cellules positives dans l'échantillon à analyser en fonction du coefficient vectoriel ($\Theta$).

Ici, une cellule positive est donc une cellule considérée comme ayant réagi à au moins l'un des marqueurs.

Un tel procédé permet ainsi :

- D'une part, de traduire par un « taux d'erreur » le classement visuel auquel aboutit un expert en analysant un échantillon (comprenant potentiellement des cellules positives) par rapport à un échantillon de référence (ne comprenant que des cellules négatives) ; ce taux d'erreur est le taux de fausses cellules positives détectées, fausses si l'on en croit l'échantillon de référence. On peut ainsi caractériser « l'œil » de chaque expert par un « taux d'erreur » qui lui est propre et comparer les jugements de différents experts sur le même échantillon, c'est-à-dire le taux de « fausses cellules positives » qu'ils s'autorisent à accepter dans le processus de classification.
- D'autre part, d'utiliser systématiquement un même jugement, c'est-à-dire un même taux d'erreur, pour classer des échantillons de provenances différentes. Adapté à l'ICS, ce procédé permet d'analyser automatiquement la réponse immunitaire de cellules mises en contact avec des virus, des bactéries et/ou des cellules cancéreuses.

En d'autres termes, pour comparer différentes analyses, à partir de classement réalisés par des utilisateurs différents, il est possible de déterminer une grandeur représentative du classement, le taux ($\alpha$).

La corrélation entre le taux ($\alpha$) et le classement des cellules positives de l'échantillon à analyser est en outre quasi bijective, c'est-à-dire qu'en imposant le taux ($\alpha$) déterminé à partir d'un tri réalisé par un utilisateur, et grâce au processus d'optimisation de la présente invention, il est possible de retrouver un ensemble de cellules positives ($S^+$) correspondant très fortement au tri initial de l'utilisateur. En d'autres termes, le procédé selon l'invention permet de retrouver une solution unique.

En d'autres termes, dans un exemple de mise en oeuvre particulièrement intéressant, le taux de faux positifs $\alpha$ utilisé dans le procédé selon le deuxième aspect est le taux de faux positifs $\alpha$ déterminé à l'issu du procédé selon le premier aspect.

Ainsi, le procédé selon le premier aspect comporte donc :

- une étape de fourniture du taux de faux positifs ($\alpha$) dans l'échantillon de référence ;
- une étape de détermination d'un coefficient vectoriel ($\Theta$) à partir de l'échantillon de référence et du taux de faux positifs ($\alpha$) ; et
- une étape de détermination d'au moins un ensemble ($S^+$) de cellules positives dans l'échantillon à analyser en fonction du coefficient vectoriel ($\Theta$).

Il est important de noter que les deux approches sont parallèles.

Dans le premier cas, le procédé dispose en entrée d'un échantillon de référence, c'est-à-dire de cellules négatives connues, d'un échantillon à analyser, ainsi que d'un sous-ensemble de cellules de l'échantillon à analyser jugées positives par un utilisateur (c'est-à-dire un ensemble appelé $E^+$), appelé également expert. Le procédé comporte alors une étape de détermination d'un seuil (ou de manière générale d'une valeur d'intérêt), pour chacun des marqueurs, au-delà duquel une cellule est considérée positive pour le marqueur considéré. Ces seuils sont déterminés pour reproduire au mieux le jugement d'expert sur l'échantillon à analyser. En sortie, le procédé retourne un taux de faux positifs dans l'échantillon de référence et un classement de l'échantillon à analyser, analysé, c'est-à-dire un ensemble de cellules positives ($S^+$) et un ensemble de cellules négatives ($S^-$). Une cellule est déterminée positive si son expression pour au moins un marqueur est supérieure au seuil retenu pour ce marqueur.

Dans le second cas, le procédé dispose, en entrée, de l'échantillon de référence, de l'échantillon à analyser ainsi que d'un taux de faux positifs $\alpha$ tolérable. Le procédé comporte alors une étape de détermination, pour chacun des marqueurs, du seuil au-delà duquel une cellule est considérée positive vis-à-vis de ce marqueur. Ces seuils sont déterminés pour maximiser le nombre de positifs détectés dans l'échantillon à analyser, sous la contrainte de reproduire le taux de faux positifs imposé dans l'échantillon de référence. En sortie, le procédé retourne un classement de l'échantillon analysé c'est-à-dire un ensemble de cellules positives ($S^+$) et un ensemble de cellules négatives ($S^-$).

Dans les deux cas, il s'agit de déterminer, à partir de l'un des échantillons de cellules (soit l'échantillon à analyser soit l'échantillon de référence) et avec l'un des paramètres additionnels (soit ensemble ($E^+$) de cellules déclarées positives par un expert parmi les cellules de l'échantillon à analyser soit le taux de faux positifs ($\alpha$) dans l'échantillon de référence), un coefficient vectoriel ($\Theta$), puis d'appliquer le coefficient vectoriel à l'autre des échantillons de cellules (soit l'échantillon de référence s'il s'agissait de considérer l'échantillon à analyser soit l'échantillon à analyser s'il s'agissait de considérer l'échantillon de référence). Dans le premier cas, il est ainsi possible de déterminer le taux ($\alpha$) alors que dans le deuxième cas le procédé renvoie au moins l'ensemble ($S^+$) de cellules considérées comme positives parmi les cellules de l'échantillon à analyser.

Un « coefficient vectoriel » se réfère donc ici à un vecteur comportant un ensemble de coefficients relatifs à chacun des marqueurs.

Dans les deux cas, le procédé procède ainsi à un classement en un ensemble de cellules positives et un ensemble de cellules négatives des cellules de l'autre l'échantillon en fonction du coefficient vectoriel ($\theta$).Comme ceci sera détaillé par la suite en référence aux figures, dans un mode de réalisation particulièrement intéressant, soit le procédé permet donc de déterminer $\alpha$ à partir de l'ensemble $S^+$, qui dans le premier cas est superposé au mieux sur l'ensemble $E^+$, soit le procédé permet de déterminer l'ensemble $S^+$ à partir du taux $\alpha$ lorsqu'il est imposé en donnée d'entrée.

Bien entendu, disposer de l'échantillon à analyser et de l'échantillon de référence signifie que l'utilisateur (pour réaliser lui-même son classement ou pour mettre en oeuvre le procédé) dispose ici des expressions de chacune des cellules de chacun des échantillons à chacun des marqueurs. Des mesures préalables d'une valeur d'intérêt (ici les expressions de chacun des marqueurs) sont donc réalisées.

Un tel procédé vise ainsi à mieux assurer la reproductibilité du processus de détection et est robuste, c'est-à-dire adaptable à la variabilité inhérente aux essais biologiques. Il permet en outre de comparer les résultats de scientifiques différents sur des échantillons différents si ceux-ci adoptent une valeur commune de « taux d'erreur », ou bien de relativiser les conclusions d'un scientifique sur un échantillon particulier si son taux de faux positifs sort des valeurs admises par la communauté d'experts.

Dans les deux cas, le procédé comporte ainsi par exemple une étape d'identification d'un modèle mathématique et une étape de détermination d'un coefficient vectoriel, appelé ici $\theta$, à partir d'un échantillon de référence et/ou d'un échantillon à analyser selon la version mise en oeuvre.

Selon un exemple intéressant, le coefficient vectoriel ($\theta$) est le vecteur des valeurs seuils pour l'expression de chacun des marqueurs, c'est à dire un ensemble de valeurs seuils d'expression de chacun des marqueurs, au-delà de chacune desquelles une cellule est déclarée positive. Cette détermination du coefficient vectoriel $\theta$ peut s'effectuer par une méthode d'optimisation :

- pour reproduire une classification faite par un utilisateur (premier cas),
- ou pour maximiser le nombre de cellules positives détectées dans un échantillon à analyser, sous la contrainte de respecter un taux de faux positifs donné dans un échantillon de référence (second cas).

En d'autres termes, l'étape de détermination du coefficient vectoriel ($\theta$) comporte par exemple une minimisation d'une quantité de faux positifs et une minimisation d'une quantité de faux négatifs dans l'échantillon à analyser.

Ou par exemple, l'étape de détermination du coefficient vectoriel ($\theta$) comporte une maximisation d'une quantité de cellules positives dans l'échantillon à analyser respectant le taux de faux positifs ($\alpha$) donné.

Selon un exemple intéressant de mise en oeuvre, l'étape de détermination du coefficient vectoriel ($\theta$) comporte :

- une étape de définition, pour chacun des marqueurs j, d'un $s_j$-quantile $y_j^s$ , quantile d'une fonction de distribution cumulée $P_j^{test}$ associée à une fonction de distribution de probabilité lissée $p_j^{test}$ déterminée par lissage d'une distribution marginale du $j$ième marqueur dans l'échantillon à analyser ;

- une étape de définition de l'ensemble ($S^+$) de cellules déclarées positives par rapport au $s_j$-quantile $y_j^s$ pour chaque marqueur j dans l'échantillon à analyser ;
- une étape de définition et détermination d'un cardinal de la différence symétrique entre $S^+$ et $E^+$ ;
- une étape de détermination de chacune des valeurs du coefficient vectoriel ($\theta$) de chacun des marqueurs la plus grande par minimisation du cardinal par rapport à la valeur $s_j$ de chaque marqueur j dans l'intervalle [0,1], pour tous les marqueurs.

Selon l'invention, l'étape de détermination d'un coefficient vectoriel ($\Theta$) comporte :

- une étape de définition, pour chacun des marqueurs j, d'un $s_j$-quantile $y_j^s$ , quantile d'une fonction de distribution cumulée $P_j^{ref}$ associée à une fonction de distribution de probabilité lissée $p_j^{ref}$ déterminée par lissage d'une distribution marginale du $j$ième marqueur dans l'échantillon de référence ;

- une étape de définition d'une fonction F(s) représentant un taux de cellules négatives dans l'échantillon de référence, croissante de [0,1] à [0,1], par $F(s) = \frac{card(VN^s)}{n}$ où $VN^s$ est définie par $VN^s = \{\ i=1,...,n\ tel\ que\ y_{ij}^{ref} < y_j^s$ pour tout j=1,...,d \}, l'ensemble des cellules de l'échantillon de référence dont une valeur mesurée est sous la valeur du coefficient vectoriel (θ) du marqueur correspondant pour tous les marqueurs ;
- une étape de détermination de la valeur de $s_j$ la plus petite tel que $F(s) > 1-\alpha$ ; et
- une étape de détermination des valeurs du coefficient vectoriel (θ).

Selon un mode intéressant de mise en oeuvre, le procédé comporte une étape d'analyse dans laquelle au moins un marqueur auquel au moins une cellule réagit positivement est identifié.

Accessoirement, le procédé peut comporter une étape de vérification par évaluation d'une matrice de confusion. Ceci permet de vérifier une qualité d'apprentissage. Par exemple, pour l'échantillon de référence, pour une certaine valeur du coefficient vectoriel θ, considérant par exemple qu'il comporte l'ensemble des valeurs seuils d'expression de chacun des marqueurs au-delà desquelles une cellule est déclarée positive, la matrice de confusion se présente de la manière suivante :

| Echantillon de référence prédit / Echantillon de référence réel | Cellules négatives | Cellules positives |
|---|---|---|
| Cellules négatives | $VN_{ref}$ Vrai négatifs | $FP_{ref}$ Faux positifs |
| Cellules positives | 0 | 0 |

La matrice de confusion permet de confronter des valeurs observées avec celles qui sont prédites par le modèle mathématique. En effet, un modèle parfait appliqué à l'échantillon de référence ne devrait retourner que de vrais négatifs. Une telle matrice traduit le fait que, bien qu'un échantillon de référence ne soit censé comporter, par définition, que des cellules négatives, le modèle mathématique indiquera que cet échantillon comporte des cellules négatives et des cellules positives. Les cellules identifiées comme négatives par le modèle seront donc considérées comme vraies négatives, alors que les cellules identifiées comme positives par le modèle seront considérées comme étant de fausses positives, puisque par définition l'échantillon de référence n'en comporte aucune. Ceci permet ainsi de définir un taux de faux positifs dans l'échantillon de référence :

$$\alpha = \frac{FP_{ref}}{FP_{ref} + VN_{ref}}$$

où $FP_{ref}$ représente le nombre de faux positifs et $VN_{ref}$ le nombre de vrais négatifs, tous deux dans l'échantillon de référence.

Dans un modèle parfait, ce taux α vaudrait donc zéro. Mais les règles d'apprentissage utilisées dans les deux modes de réalisation conduisent à dégrader ce résultat, c'est-à-dire à autoriser une valeur de α différente de zéro, par exemple comprise dans l'intervalle ]0 ; 0,5].

Dans le premier cas, on connait le jugement d'un utilisateur pour l'échantillon à analyser, c'est-à-dire l'ensemble des cellules positives (E⁺) et l'ensemble des cellules négatives déterminés par un utilisateur sur l'échantillon à analyser. Le procédé détermine alors le coefficient vectoriel θ permettant de retrouver au mieux le classement de cet utilisateur. La matrice de confusion pour l'échantillon à analyser se présente de la manière suivante :

| Echantillon à analyser prédit / Echantillon à analyser réel | Cellules négatives | Cellules positives |
|---|---|---|
| Cellules négatives | VN<br>Vrai négatifs | FP<br>Faux positifs |
| Cellules positives | FN<br>Faux négatifs | VP<br>Vrai positifs |

L'étape de détermination du vecteur $\theta$ peut alors consister à minimiser la somme des valeurs de *FP* (faux positifs) et de *FN* (faux négatifs) de l'échantillon à analyser, ou bien les taux de faux positifs FP/(FP+VN) et de faux négatifs FN/(FN+VP), ce qui revient au même puisque FP+VN=FN+VP.

Il apparaît que ce problème d'optimisation trouve un unique optimum vectoriel $\theta$ (sous réserve que l'échantillon à analyser soit suffisamment grand, critère dont l'appréciation dépend à la fois du nombre de cellules dans l'échantillon ainsi que du contenu d'information de l'échantillon considéré) et que cet optimum peut être caractérisé par le taux de faux positifs $\alpha$ dans l'échantillon de référence, c'est-à-dire en appliquant le procédé avec l'optimum vectoriel $\theta$ déterminé précédemment à un échantillon de référence.

Dans le second cas, on impose un taux de faux positifs tolérable $\alpha$. On ne peut alors pas représenter de matrice de confusion pour l'échantillon à analyser puisqu'on ne connaît pas a *priori* le classement de l'utilisateur. On cherche alors à déterminer le coefficient vectoriel $\theta$ qui maximise le nombre de positifs détectés dans l'échantillon à analyser, tout en respectant le taux de faux positifs $\alpha$, imposé, dans l'échantillon de référence fourni. Ce procédé permet de retrouver la classification qu'aurait pu faire visuellement un utilisateur qui produit le même taux de faux positifs $\alpha$.

Dans les deux cas, le procédé permet ainsi d'analyser les cellules de l'échantillon à analyser, c'est-à-dire non seulement les quantifier, mais également identifier quelles cellules ont réagi à au moins l'un des marqueurs.

L'invention, selon un exemple de mise en oeuvre, sera bien comprise et ses avantages apparaitront mieux à la lecture de la description détaillée qui suit, donnée à titre indicatif et nullement limitatif, en référence aux dessins annexés dans lesquels :

La figure 1 montre schématiquement un mécanisme de production de molécules (Mo) par une cellule (Ce) excitée par un antigène ($\alpha\gamma$), chaque molécule étant détectable au moyen d'un anticorps ($\alpha$C) couplé à une sonde fluorescente (Sf),

La figure 2 illustre une représentation en deux dimensions, représentant un premier marqueur (Mj) et un deuxième marqueur (Mj'), d'une répartition des cellules d'un échantillon de référence et d'un échantillon à analyser,

La figure 3 représente un exemple de densité de probabilité lissée obtenue pour un marqueur (j) en fonction des mesures réalisées dans un échantillon de référence et un échantillon à analyser, et

La figure 4 représente un exemple de fonctions de répartition cumulée obtenues pour un marqueur (j) en fonction des mesures réalisées dans un échantillon de référence et un échantillon à analyser.

La présente description se réfère à titre d'exemple aux essais de marquage de cytokine intracellulaire ou « Intracellular Cytokine Staining » (ICS). Bien entendu, le procédé d'analyse décrit dans le cadre de la présente demande est applicable à tout type d'analyse de cellules, voire à tout problème de classification multidimensionnelle.

Un essai ICS est d'habitude réalisé sur des échantillons de sang incubés avec des antigènes ($\alpha\gamma$) dérivés de virus, de bactéries ou de cellules cancéreuses. Comme l'illustre la figure 1, après cette incubation, les cellules (Ce) capables de reconnaître les antigènes ($\alpha\gamma$) commencent à produire des molécules (Mo) différentes (usuellement des cytokines) qui sont détectées au moyen d'anticorps ($\alpha$C). Chaque anticorps ($\alpha$C) est spécifique à une molécule (Mo) donnée et est couplé à une sonde fluorescente (Sf) donnée. Ainsi, l'analyse de la fluorescence associée à une cellule permet d'identifier quelles molécules ont été produites par cette cellule.

En ICS une cellule (Ce) est déclarée positive si elle a produit en quantité « détectable », c'est-à-dire en quantité supérieure à un seuil prédéterminé, au moins une molécule (Mo) d'intérêt. Les méthodes utilisées couramment pour identifier les cellules « positives », donc réagissant à au moins l'un des marqueurs, reposent sur le jugement visuel d'un expert, ou utilisateur.

L'ensemble des données d'un échantillon à analyser peut en effet se représenter sous la forme d'un nuage de points, dans un espace multidimensionnel, de dimension donnée par le nombre de marqueurs. Chaque point correspond à une cellule et est composé des expressions de tous les marqueurs pour cette cellule.

Comme l'illustre la figure 2, l'utilisateur, c'est-à-dire généralement l'expert, visualise des coupes bidimensionnelles d'un des marqueurs (Mj) par rapport à un autre (Mj') dans cet espace multidimensionnel et se réfère à un échantillon dit « de référence » (c'est-à-dire un échantillon de négatifs connus), avant incubation, dans lequel toutes les cellules sont négatives.

L'expert dessine alors manuellement un ou des intervalles de sélection autour de ce qu'il juge être des cellules positives, c'est-à-dire qui se démarquent visuellement du nuage de points le long de l'un ou l'autre des deux axes, et donc de l'un ou l'autre des deux marqueurs représentés. Ceci est par exemple représenté par le contour en pointillés sur la figure 2.

Un inconvénient de cette procédure est qu'elle est subjective et rend les résultats de différents utilisateurs ou laboratoires difficiles à comparer. Elle est en outre très difficilement reproductible.

Pour résoudre au moins en partie les inconvénients précités, le procédé, selon un exemple de mise en oeuvre de la présente invention, analyse deux échantillons, le premier étant l'échantillon de référence des cellules négatives connues et le second étant l'échantillon à analyser des cellules inconnues. Il identifie les cellules positives dans l'échantillon à analyser. Autrement dit, les données d'entrée du procédé sont constituées de deux échantillons :

- L'échantillon de référence, qui est par exemple représenté par une matrice qui contient les mesures (de fluorescence) d'un échantillon de n cellules négatives (dans lequel aucun marqueur n'est exprimé, car les cellules n'ont pas été sollicitées), « n » étant ainsi la taille des informations exploitées ou le nombre de points. Pour chaque cellule, un nombre d de marqueurs (identifiés par exemple Mj, avec j = 1 ... d) sont mesurés, « d » étant donc la dimension des cellules négatives.

L'échantillon de référence est par exemple notée $\underline{\underline{X}}^{ref}$, matrice de taille $n \times d$, où $\underline{\underline{X}}^{ref} = [x^{ref}_{ij}]$ (avec i = 1,...,n et j=1,...,d), $x^{ref}_{ij}$ correspondant à la mesure (de fluorescence) du $j^{ème}$ marqueur pour la $i^{ème}$ cellule.

- L'échantillon à analyser, qui est par exemple représenté par une matrice qui contient les mesures (de fluorescence) d'un échantillon de m cellules, lesquelles contiennent des cellules positives et négatives (parmi lesquelles certains marqueurs sont exprimés; les cellules ayant été sollicitées, certaines ont réagi). Pour chaque cellule, les mêmes d marqueurs (fluorescents) sont mesurés.

L'échantillon à analyser est par exemple notée $\underline{\underline{X}}^{test}$, matrice de taille m x d, où $\underline{\underline{X}}^{test} = [x^{test}_{kj}]$ (avec k = 1,...,m et j=1,...,d), $x^{test}_{kj}$ correspondant à la mesure (de fluorescence) du $j^{ème}$ marqueur pour la $k^{ième}$ cellule.

Les données de sortie principales du procédé sont l'ensemble des cellules de l'échantillon à analyser qui sont déclarées comme étant positives. Une cellule de l'échantillon à analyser est déclarée positive si l'expression normalisée de l'un des marqueurs, c'est-à-dire d'au moins l'un des marqueurs, est supérieure à la valeur du seuil correspondant estimée à la troisième étape, détaillée ultérieurement.

Première étape : Préparation des données

Lors d'une première étape, optionnelle, les expressions des marqueurs (valeurs de fluorescences mesurées) pour l'échantillon de référence et pour l'échantillon à analyser sont par exemple d'abord normalisées puis dilatées. En d'autres termes, l'étape de préparation comporte par exemple une étape de normalisation et une étape de dilatation des données. Ceci permet de rendre les mesures indépendantes de l'échelle et de la calibration de l'outil de mesure. Un tel conditionnement du problème permet en outre de simplifier le procédé tout en permettant que la classification puisse se faire correctement.

On note par exemple les matrices $\underline{\underline{X}}^{ref}$ et $\underline{\underline{X}}^{test}$ précédemment définies une fois normalisées par : $\underline{\underline{Y}}^{ref} = [y^{ref}_{ij}]$ et $\underline{\underline{Y}}^{test} = [y^{test}_{kj}]$ où $y^{ref}_{ij}$ et $y^{test}_{kj}$ sont les valeurs normalisées des expressions des marqueurs (mesures de fluorescence) $x^{ref}_{ij}$ et $x^{test}_{kj}$. Pour cela, les mesures sont ramenées à des valeurs dans l'intervalle unité [0,1] puis elles sont exprimées en échelle log.

Par exemple, pour chaque marqueur j dans {1,...,d}, l'étape de préparation des données du procédé comporte par exemple les étapes suivantes :

- une étape de détermination d'un minimum $x_{\{j,min\}}$ et d'un maximum $x_{\{j,max\}}$ des expressions mesurées du marqueur considéré dans l'échantillon de référence et dans l'échantillon à analyser ;
- une étape de normalisation et dilatation des données de l'échantillon de référence et de l'échantillon à analyser, qui s'effectue de la manière suivante :

$$y^{ref}_{ij} = f_j(x^{ref}_{ij}); \; i=1,\dots,n; \; j=1,\dots,d$$

$$y^{test}_{kj} = f_j(x^{test}_{kj}); \; k=1,\dots,m; \; j=1,\dots,d$$

où $f_j(x)$ est par exemple la fonction de dilatation suivante :

$$f_j(x) = log_{10}\left((x-x_{\{j,min\}})/(x_{\{j,max\}} - x_{\{j,min\}}) + \varepsilon\right)$$

dans laquelle $(x-x_{\{j,min\}})/(x_{\{j,max\}} - x_{\{j,min\}})$ correspond à la normalisation à proprement parler, et où $\varepsilon$ est le paramètre de dilatation ; avec $j$ dans $\{1,\dots,d\}$, et $\varepsilon$ compris entre $10^{-3}$ et $10^{-6}$ par exemple, ce nombre pouvant être adapté. Il vaut par exemple $10^{-6}$.

**Deuxième étape : Lissage de la distribution des valeurs obtenues pour un échantillon**

Cette étape vise à lisser des densités de probabilités des marqueurs de l'échantillon considéré, par exemple l'échantillon de référence pour l'exemple détaillé ici, normalisées, afin qu'elles deviennent continues et indépendantes des effets de discrétisation. Autrement dit, ceci permet d'avoir une fonction de densité de probabilité continue à partir des valeurs discrètes que sont les résultats de mesures. Il est par exemple possible d'utiliser la méthode de Parzen-Rozenblatt, aussi appelée « estimateur à noyau ».

Les densités de probabilités unidimensionnelles (c'est-à-dire pour un marqueur à la fois) sont par exemple obtenues en utilisant la méthode d'estimation à noyau avec un noyau Gaussien et la règle de Silverman pour la largeur du noyau, appelé paramètre de lissage. Pour exemple, ceci est appliqué sur les données normalisées de l'échantillon de référence déterminées dans l'étape 1, c'est-à-dire les $y^{ref}_{ij}$.

Pour chaque marqueur j dans $\{1,\dots,d\}$, l'étape de lissage du procédé comporte par exemple les étapes suivantes :

- une étape de sélection d'un noyau K, par exemple Gaussien ;
- une étape de détermination du paramètre de lissage h, qui correspond à la largeur du noyau de lissage, en utilisant par exemple la règle de Silverman :

$$h_j = \left(\frac{3}{4n}\right)^{\frac{1}{5}} min(\sigma_j, irq_j)$$

où $\sigma_j$ et $irq_j$ sont respectivement l'écart-type empirique et l'interquartile de l'ensemble $\{y^{ref}_{ij}, i=1,\dots,n\}$.
- une étape de définition de la fonction de densité de probabilité de la fonction de distribution marginale du $j$ème marqueur de l'échantillon de référence par :

$$p^{ref}_j(x) = \frac{1}{nh_j}\sum_{i=1}^{n} K\left(\frac{x - y^{ref}_{ij}}{h_j}\right)$$

où K est un noyau, par exemple le noyau Gaussien défini par $K(x) = \frac{1}{\sqrt{2\pi}}\exp\left(\frac{-x^2}{2}\right)$.

A ce stade, les résultats de mesures normalisés pour l'échantillon à analyser et une densité de probabilité de résultat pour chaque marqueur pour l'échantillon de référence sont ainsi connus.

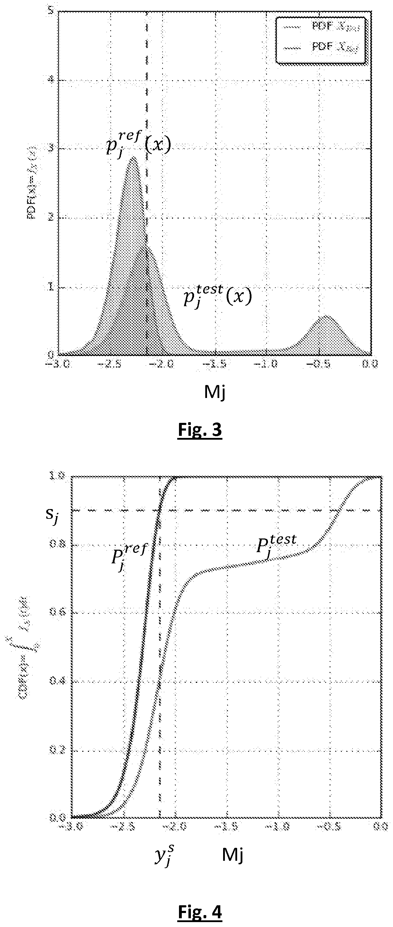

Ces densités de probabilité sont par exemple représentées sur la figure 3 pour un marqueur $j$.

Ensuite, le procédé comporte une étape de définition d'une estimation des densités multivariées, qui correspond au produit des noyaux univariés, par exemple de la façon suivante :

$$p^{ref}(x) = \frac{1}{n \times h_1 \times \dots \times h_d} \sum_{i=1}^{n} \prod_{j=1}^{d} K_j \left( \frac{x_j - y_{ij}^{ref}}{h_j} \right)$$

Il est en outre possible de simplifier cette expression en considérant que $K_j = K$, voire $h_j = h$ pour toutes les dimensions.

Selon la version du procédé, définie par la suite, qui est mise en oeuvre, l'étape de lissage est réalisée sur au moins l'échantillon à analyser à la place de l'échantillon de référence.

Troisième étape : Estimation des seuils

L'étape suivante, ici la troisième étape, vise à déterminer les valeurs des seuils pour les expressions des marqueurs au-delà desquels une cellule est déclarée positive.

Pour déterminer le seuil associé à chaque marqueur, deux cas sont ici envisagés.

Dans un premier cas, dit version 1, une entrée auxiliaire consiste en un sous-ensemble $E^+$ de cellules de l'échantillon à analyser que l'utilisateur juge positives. Le procédé produit alors une sortie auxiliaire qui est le taux $\alpha$ de faux positifs correspondant au jugement de l'utilisateur.

Dans un deuxième cas, dit version 2, l'entrée auxiliaire est le taux $\alpha$ de faux positifs acceptable, qui correspond à la proportion de cellules qui sont détectées positives par le procédé quand celui-ci est appliqué à un échantillon de cellules négatives, par exemple l'échantillon de référence.

Par défaut, si aucune entrée auxiliaire n'est fournie, le procédé effectue la version 2 avec la valeur imposée $\alpha=0$, qui correspond à minimiser les valeurs des seuils, sous la contrainte que l'algorithme déclare négatives toutes les cellules de l'échantillon de référence. C'est la version dite « sans biais » du procédé.

Autrement dit, le procédé comporte une étape de fourniture d'un paramètre additionnel qui est soit l'ensemble $E^+$, soit le taux de faux positif $\alpha$, sachant que si aucun paramètre additionnel n'est spécifié, l'étape de fourniture d'un paramètre additionnel consiste à considérer $\alpha = 0$.

Autrement dit, dans les deux cas, les principes de calculs sont les mêmes. Dans le premier cas, ceux-ci sont appliqués dans l'échantillon à analyser pour prédire dans l'échantillon de référence, tant que dans le deuxième cas, c'est l'inverse.

Troisième étape - version 1

Dans la version 1, l'utilisateur fait d'abord un tri parmi les cellules de l'échantillon à analyser. Les cellules jugées positives par l'utilisateur forment l'ensemble appelé $E^+$, comprenant entre $0$ à $m$ cellules de l'échantillon à analyser.

Dans cette version, les seuils sont estimés de manière à reproduire au mieux le jugement de l'utilisateur sur l'échantillon à analyser.

Autrement dit, la troisième étape selon la version 1 comporte par exemple les étapes suivantes :

- Pour une valeur $s_j$ (correspondant alors à une probabilité), une étape de définition d'un $s_j$-quantile $y_j^s$, quantile de la fonction de distribution cumulée $P_j^{test}$ associée à la fonction de distribution de probabilité lissée $p_j^{test}$ déterminée à l'étape 2 pour chaque marqueur j :

$$s_j = \int_{-\infty}^{y_j^s} p_j^{test}(x)dx = P_j^{test}(y_j^s)$$

Ceci est par exemple représenté sur la figure 4 pour un marqueur *j*.

Le $s_j$-quantile $y_j^s$ correspond donc ici à une valeur seuil d'expression normalisée pour un marqueur j considéré : au-delà, une cellule sera considérée positive pour ce marqueur, en dessous elle sera considérée négative pour ce marqueur.

- une étape de définition de l'ensemble de cellules déclarées positives par rapport au $s_j$-quantile $y_j^s$, pour chaque marqueur dans l'échantillon à analyser : en prenant l'union de ces d ensembles, on obtient ainsi l'ensemble

$S^+ = \{k=1,...,m$ tel que $y_{kj}^{test} \geq y_j^s$ pour un $j=1,...,d\}$. Ceci signifie que l'ensemble $S^+$ comprend l'ensemble des cellules de l'échantillon à analyser considérées comme positives, c'est-à-dire les cellules analysées dont l'expression d'un marqueur (valeur de fluorescence mesurée) est supérieure à $y_j^s$ pour au moins un marqueur donné. Autrement dit, l'ensemble $S^+$ comporte toutes les cellules qui ont une expression d'un marqueur normalisée supérieure au seuil pour au moins un marqueur.

Il y a donc à ce stade deux ensembles définis : $E^+$ l'ensemble des cellules jugées positives par l'utilisateur, et $S^+$ l'ensemble des cellules définies positives par le procédé. Si $E^+$ est connu, $S^+$ reste à déterminer car il dépend des valeurs des seuils de chaque marqueur, qui sont à déterminer. Cette détermination de $S^+$ s'effectue selon les étapes suivantes :

- Une étape de définition et détermination d'un cardinal de la différence symétrique entre $S^+$ et $E^+$. Cela signifie déterminer la somme du nombre des cellules qui appartiennent à $E^+$ mais pas à $S^+$ et du nombre des cellules qui appartiennent à $S^+$ mais pas à $E^+$, c'est-à-dire qui n'appartiennent pas simultanément aux deux ensembles $S^+$ et $E^+$.
- Puis, le procédé comporte une étape de minimisation de ce cardinal par rapport à la valeur $s_j$ de chaque marqueur $j$ dans l'intervalle [0,1], pour tous les marqueurs. C'est-à-dire déterminer la valeur de seuil de chacun des marqueurs la plus grande parmi les valeurs minimisant le cardinal. Autrement dit, cette étape consiste à déterminer une valeur de seuil $y_j^s$ pour chacun des marqueurs tel qu'un maximum de cellules appartiennent à la fois à $E^+$ et $S^+$. Par exemple, dans un cas « parfait » $E^+$ et $S^+$ seraient superposés, identiques.

La valeur $s_j$ et du $s_j$-quantile $y_j^i$ pour chaque marqueur $j$ est ainsi connue.

Une simplification consiste par exemple à considérer que toutes les valeurs $s_j$ sont identiques, et valent par exemple une valeur s, et il s'agit alors de déterminer les $y_j^s$ correspondant pour chacun des marqueurs.

- Une autre étape consiste par exemple ensuite à définir la fonction $F$ (croissante de [0,1] à [0,1]) par $F(s) = \dfrac{card(VN^s)}{n}$, où $VN^s$ est définie par $VN^s = \{i=1,...,n$ tel que $y_{ij}^{ref} < y_j^s$ pour tout $j=1,...,d\}$, c'est-à-dire l'ensemble des cellules de l'échantillon de référence dont l'expression de marqueur normalisée est sous le seuil du marqueur correspondant pour tous les marqueurs (c'est-à-dire toutes les cellules de l'ensemble de référence dans un cas idéal). Déterminer le cardinal de cet ensemble permet de dénombrer ces cellules qui sont déclarées négatives. Diviser ce cardinal par $n$ donne alors le taux de cellules négatives, dans l'échantillon de référence, $n$ étant le nombre de cellules total de l'échantillon de référence.
- Enfin, le procédé comporte une étape de calcul de $\alpha$ selon la formule $\alpha=1-F(s)$, le taux de faux positifs.

En alternative à la définition et à la détermination de la fonction F, il est aussi possible de déterminer la matrice de confusion, comme détaillé précédemment, afin de déterminer le taux de faux positifs.

Dans cette version, le taux $\alpha$ est donc déterminé à partir de l'ensemble $S^+$ et le procédé renvoie en sortie, en réponse, l'ensemble $S^+$ déterminé ainsi que le taux $\alpha$.

Autrement dit, dans cette version, l'ensemble $S^+$ est construit à partir de valeurs arbitraires, cohérentes, des $s_j$, puis d'un processus d'optimisation de sorte à retrouver les seuils $y_j^s$ pour chaque marqueur qui vont permettre de classer les points.

Troisième étape - version 2

Dans la version 2, le taux $\alpha$ de faux positifs que l'utilisateur juge acceptable est imposé comme valeur d'entrée (appelé ici également paramètre additionnel). Le taux $\alpha$ correspond au taux de cellules détectées positives par l'algorithme quand celui-ci est appliqué à un échantillon de cellules négatives, par exemple l'échantillon de référence. Comme mentionné précédemment, par défaut, l'algorithme effectue la version 2 avec $\alpha=0$, ce qui signifie que l'algorithme minimise les seuils pour faire en sorte que toutes les cellules de l'échantillon de référence soient déclarées négatives.

La troisième étape pour la version 2 comporte par exemple les étapes suivantes :

- une étape de définition de $y_j^s$ , le $s_j$-quantile de la fonction de distribution cumulée $P_j^{ref}$ associée à la fonction de distribution de probabilité lissée $p_j^{ref}$ introduite à l'étape 2, pour chaque marqueur j.
- une étape de définition de la fonction F (croissante de [0,1] à [0,1]) par

$$F(s) = \frac{card(VN^s)}{n}$$ , où $VN^s$ est définie par $VN^s = \{ i=1,...,n \text{ tel que } y_{ij}^{ref} < y_j^s \text{ pour tout } j=1,...,d\}$.

- Une étape de détermination, par dichotomie par exemple, de la valeur de $s_j$ la plus petite tel que $F(s)>1-\alpha$.

Connaissant les valeurs $s_j$, il est donc ensuite possible de déterminer les seuils associés pour chacun des marqueurs.

Ainsi, dans cette version 2, ayant fixé un $\alpha$ tolérable ou égal à 0, on cherche la plus petite valeur de seuil correspondant pour chacun des marqueurs.

En appliquant les valeurs de seuils déterminées à l'échantillon à analyser, le procédé peut alors ensuite déterminer l'ensemble $S^+$ de cellules positives, comme ceci est détaillé dans une quatrième étape décrite ci-après.

Ainsi, dans cette version, l'ensemble $S^+$ est déterminé à partir du taux $\alpha$.

Quelle que soit la version (1 ou 2), à l'issue de l'étape 3 précédemment décrite, on connaît combien de cellules, et lesquelles, sont considérées positives dans l'échantillon à analyser, et quel est le taux de faux positifs ($\alpha$) dans l'échantillon de référence et de fait, les valeurs $s_j$ et les $s_j$-quantiles $y_j^s$ à considérer pour chacun des marqueurs.

Quatrième étape : Classification de l'échantillon à analyser

Ensuite, une quatrième étape vise à classer les cellules de l'échantillon à analyser en un ensemble de cellules positives d'une part, et négatives d'autre part.

Une cellule de l'échantillon à analyser est déclarée positive si l'expression normalisée de l'un des marqueurs, c'est-à-dire d'au moins l'un des d marqueurs, est supérieure à la valeur du seuil correspondant estimée à la troisième étape.

La quatrième étape comporte par exemple une étape de définition et de détermination d'un ensemble de cellules déclarées négatives dans l'échantillon à analyser par $S^- = \{k=1,...,m \text{ tel que } y^{test}_{kj} < y^s_j \text{ pour tout } j=1,...,d \}$.

Est ainsi défini l'ensemble $S^-$ des cellules déclarées négatives, c'est-à-dire celles dont toutes les expressions des marqueurs normalisées sont sous les seuils des marqueurs correspondants. L'ensemble $S^+$ de cellules déclarées positives est ainsi le complémentaire de $S^-$.

Ainsi, l'étape précédemment mentionnée est par exemple particulièrement intéressante suite à la version 2 de la troisième étape, alors que dans la version 1, il est par exemple possible de déterminer l'ensemble $S^-$ directement en prenant le complémentaire de l'ensemble $S^+$ qui a été déterminé à partir de l'ensemble $E^+$ en vue du calcul de $\alpha$.

Cinquième étape : Analyse des cellules positives

Pour chaque cellule détectée comme positive dans l'échantillon à analyser, le procédé peut indiquer au moins un marqueur dont l'expression est supérieure au seuil correspondant.

Pour cela, une première étape vise à définir un ensemble $X^+$ tel que $X^+=\{(k,j), k \text{ dans } S^+ \text{ et } j=1,...,d \text{ tel que } y^{test}_{kj} \geq y^s_j \}$. Ainsi, $X^+$ représente l'ensemble des couples *(cellule, marqueur),* où *cellule* est une cellule déclarée positive dans l'échantillon à analyser et *marqueur* est un marqueur dont la valeur normalisée est supérieure au seuil correspondant pour la *cellule.* Par conséquent, pour l'ensemble des cellules ayant été définies comme positives, en considérant un marqueur en particulier, certaines cellules ont un marqueur dont l'expression normalisée est supérieure au seuil correspondant, alors que d'autres peuvent avoir une expression inférieure au seuil correspondant, celles-ci ayant alors été déclarées positives de par l'expression au-delà du seuil d'un autre marqueur.

Ainsi, parmi les cellules déclarées positives, il est par exemple possible de dénombrer combien de fois un marqueur s'est exprimé. Pour cela, une étape consiste à déterminer, pour chaque marqueur $j$, la valeur de $Z_j = card ( k$ dans $S^+$ tel que $(k,j)$ est dans $X^+)$, qui est aussi égal à $Z_j = card ( k \text{ dans } S^+ \text{ tel que } y^{test}_{kj} \geq y^s_j )$. En d'autre terme, le procédé comporte par exemple une étape de dénombrement des occurrences d'un marqueur.

Connaissant l'occurrence de chaque marqueur par exemple, il est ainsi possible de les hiérarchiser, par exemple par ordre d'importance, le plus important (fréquent) étant alors donné par l'expression argmax($Z_j$). Le procédé comporte alors par exemple une étape de hiérarchisation des marqueurs selon leur occurrence, c'est-à-dire selon le nombre de fois qu'une cellule s'est exprimée à son égard.

Ainsi, par exemple, un post-processeur peut alors fournir une analyse statistique de l'ensemble de sortie $X^+$, par exemple une hiérarchisation des marqueurs.

## Revendications

1. Procédé d'analyse de cellules d'un échantillon réagissant à au moins un marqueur spécifique comportant :

   - une étape de fourniture d'un échantillon de référence et d'un échantillon à analyser ;

   le procédé étant **caractérisé en ce qu'**il comporte en outre :

   - une étape de fourniture d'un ensemble ($E^+$) de cellules déclarées positives par un expert parmi les cellules de l'échantillon à analyser ;
   - une étape de détermination d'un coefficient vectoriel ($\Theta$) à partir de l'échantillon à analyser et de l'ensemble ($E^+$) ;
   - une étape de détermination d'au moins un ensemble de cellules positives dans l'échantillon de référence en fonction du coefficient vectoriel ($\Theta$) ; et
   - une étape de calcul d'un taux de faux positifs dans l'échantillon de référence ($\alpha$) à partir du nombre de cellules positives de l'échantillon de référence.

2. Procédé selon la revendication 1, **caractérisé en ce que** l'étape de détermination du coefficient vectoriel ($\theta$) comporte une minimisation d'une quantité de faux positifs et une minimisation d'une quantité de faux négatifs dans l'échantillon à analyser.

3. Procédé selon l'une quelconque des revendications 1 ou 2, **caractérisé en ce que** l'étape de détermination du coefficient vectoriel ($\theta$) comporte :

   - une étape de définition, pour chacun des marqueurs j, d'un $s_j$-quantile $y_j^s$ quantile d'une fonction de distribution cumulée $P_j^{test}$ associée à une fonction de distribution de probabilité lissée $p_j^{test}$ déterminée par lissage d'une distribution marginale du $j^{\text{ème}}$ marqueur dans l'échantillon à analyser ;
   - une étape de définition de l'ensemble ($S^+$) de cellules déclarées positives par rapport au $s_j$-quantile $y_j^s$ pour chaque marqueur j dans l'échantillon à analyser ;
   - une étape de définition et détermination d'un cardinal de la différence symétrique entre $S^+$ et $E^+$ ;
   - une étape de détermination de chacune des valeurs du coefficient vectoriel ($\theta$) de chacun des marqueurs la plus grande par minimisation du cardinal par rapport à la valeur $s_j$ de chaque marqueur j dans l'intervalle [0,1], pour tous les marqueurs.

4. Procédé selon l'une quelconque des revendications 1 à 3, **caractérisé en ce qu'**il comporte :

   - une étape de fourniture du taux de faux positifs ($\alpha$) dans l'échantillon de référence ;
   - une étape de détermination d'un coefficient vectoriel ($\theta$) à partir de l'échantillon de référence et du taux de faux positifs ($\alpha$) ; et
   - une étape de détermination d'au moins un ensemble ($S^+$) de cellules positives dans l'échantillon à analyser en fonction du coefficient vectoriel ($\Theta$).

5. Procédé d'analyse de cellules d'un échantillon réagissant à au moins un marqueur spécifique comportant :

   - une étape de fourniture d'un échantillon de référence et d'un échantillon à analyser ;
   - une étape de fourniture d'un taux de faux positifs ($\alpha$) dans l'échantillon de référence ;
   - une étape de détermination d'un coefficient vectoriel ($\theta$) à partir de l'échantillon de référence et du taux de faux positifs ($\alpha$) ; et
   - une étape de détermination d'au moins un ensemble ($S^+$) de cellules positives dans l'échantillon à analyser en fonction du coefficient vectoriel ($\theta$) ;

**caractérisé en ce que** l'étape de détermination d'un coefficient vectoriel ($\Theta$) comporte :

- une étape de définition, pour chacun des marqueurs j, d'un $s_j$-quantile $y_j^s$, quantile d'une fonction de distribution cumulée $P_j^{ref}$ associée à une fonction de distribution de probabilité lissée $p_j^{ref}$ déterminée par lissage d'une distribution marginale du $j^{\text{ème}}$ marqueur dans l'échantillon de référence ;
- une étape de définition d'une fonction F(s) représentant un taux de cellules négatives dans l'échantillon de référence, croissante de [0,1] à [0,1], par $F(s) = \dfrac{card(VN^s)}{n}$, où $VN^s$ est définie par $VN^s = \{\ i=1,...,n\ tel\ que\ y_{ij}^{ref} < y_j^s$ pour tout j=1,...,d }, l'ensemble des cellules de l'échantillon de référence dont une valeur mesurée est sous la valeur du coefficient vectoriel ($\theta$) du marqueur correspondant pour tous les marqueurs ;
- une étape de détermination de la valeur de $s_j$ la plus petite tel que *F(s)>1-$\alpha$* ; et
- une étape de détermination des valeurs du coefficient vectoriel ($\theta$).

6. Procédé selon la revendication 5, **caractérisé en ce que** l'étape de détermination du coefficient vectoriel ($\theta$) comporte une maximisation d'une quantité de cellules positives dans l'échantillon à analyser respectant le taux de faux positifs ($\alpha$) donné.

7. Procédé selon l'une quelconque des revendications 1 à 6, **caractérisé en ce que** le coefficient vectoriel ($\theta$) est un ensemble de valeurs seuils d'expression de chacun des marqueurs au-delà de chacune desquelles une cellule est déclarée positive.

8. Procédé selon l'une quelconque des revendications 1 à 7, **caractérisé en ce qu'**il comporte une étape d'analyse dans laquelle au moins un marqueur auquel au moins une cellule réagit positivement est identifié.

9. Procédé selon l'une quelconque des revendications 1 à 8, **caractérisé en ce qu'**il comporte une étape de vérification par évaluation d'une matrice de confusion.


**Patentansprüche**

1. Verfahren zur Analyse von Zellen einer Probe, die mit mindestens einem spezifischen Marker reagieren, umfassend:

   - einen Schritt der Bereitstellung einer Referenzprobe und einer zu analysierenden Probe;

   wobei das Verfahren **dadurch gekennzeichnet ist, dass** es weiterhin umfasst:

   - einen Schritt der Bereitstellung eines Satzes (E⁺) von Zellen, die von einem Fachmann als positiv erklärt wurden, aus den Zellen der zu analysierenden Probe;
   - einen Schritt der Bestimmung eines Vektorkoeffizienten ($\theta$) aus der zu analysierenden Probe und dem Satz (E⁺);
   - einen Schritt der Bestimmung mindestens einer Menge von positiven Zellen in der Referenzprobe in Abhängigkeit von dem Vektorkoeffizienten ($\theta$) und
   - einen Schritt der Berechnung einer Rate von Falsch-Positiven in der Referenzprobe ($\alpha$) aus der Anzahl von positiven Zellen der Referenzprobe.

2. Verfahren nach Anspruch 1, **dadurch gekennzeichnet, dass** der Schritt der Bestimmung des Vektorkoeffizienten ($\theta$) eine Minimierung einer Menge von Falsch-Positiven und eine Minimierung einer Menge von Falsch-Negativen in der zu analysierenden Probe umfasst.

3. Verfahren nach einem der Ansprüche 1 oder 2, **dadurch gekennzeichnet, dass** der Schritt der Bestimmung des Vektorkoeffizienten ($\theta$) umfasst:

   - einen Schritt der Definition eines $s_j$-Quantils $y_j^s$ für jeden der Marker j, eines Quantils einer kumulativen Verteilungsfunktion $P_j^{test}$, die mit einer geglätteten Wahrscheinlichkeitsverteilungsfunktion v assoziiert ist, die durch Glätten einer Randverteilung des $j$-ten Markers in der zu analysierenden Probe bestimmt wird;

- einen Schritt der Definition des Satzes (S⁺) von Zellen, die als positiv erklärt wurden, in Bezug auf das $s_j$-Quantil $y_j^s$ für jeden Marker j in der zu analysierenden Probe;
- einen Schritt der Definition und Bestimmung einer Kardinalzahl der symmetrischen Differenz zwischen S⁺ und E⁺;
- einen Schritt der Bestimmung jedes der größten Werte des Vektorkoeffizienten (θ) jedes der Marker durch Minimierung der Kardinalzahl in Bezug auf den Wert $s_j$ jedes Markers j in dem Intervall [0,1] für alle der Marker.

4. Verfahren nach einem der Ansprüche 1 bis 3, **dadurch gekennzeichnet, dass** es umfasst:

- einen Schritt der Bereitstellung der Rate von Falsch-Positiven (α) in der Referenzprobe;
- einen Schritt der Bestimmung eines Vektorkoeffizienten (θ) aus der Referenzprobe und der Rate von Falsch-Positiven (α) und
- einen Schritt der Bestimmung mindestens einer Menge (S⁺) von positiven Zellen in der zu analysierenden Probe in Abhängigkeit von dem Vektorkoeffizienten (θ).

5. Verfahren zur Analyse von Zellen einer Probe, die mit mindestens einem spezifischen Marker reagieren, umfassend:

- einen Schritt der Bereitstellung einer Referenzprobe und einer zu analysierenden Probe;
- einen Schritt der Bereitstellung einer Rate von Falsch-Positiven (α) in der Referenzprobe;
- einen Schritt der Bestimmung eines Vektorkoeffizienten (θ) aus der Referenzprobe und der Rate von Falsch-Positiven (α) und
- einen Schritt der Bestimmung mindestens einer Menge (S⁺) von positiven Zellen in der zu analysierenden Probe in Abhängigkeit von dem Vektorkoeffizienten (θ);

**dadurch gekennzeichnet, dass** der Schritt der Bestimmung eines Vektorkoeffizienten (θ) umfasst:

- einen Schritt der Definition eines $s_j$-Quantils $y_j^s$ für jeden der Marker j, eines Quantils einer kumulativen Verteilungsfunktion $P_j^{ref}$, die mit einer geglätteten Wahrscheinlichkeitsverteilungsfunktion $p_j^{ref}$ assoziiert ist, die durch Glätten einer Randverteilung des $j$-ten Markers in der Referenzprobe bestimmt wird;
- einen Schritt der Definition einer Funktion F(s), die eine Rate von negativen Zellen in der Referenzprobe darstellt, die von [0,1] auf [0,1] ansteigt, durch $F(s) = \frac{card(VN^s)}{n}$, in der $VN^s$ durch $VN^s = \{i = 1, ..., n,$ so dass $y_{ij}^{ref} < y_j^s$ für jedes $j = 1, ..., d\}$ definiert ist, wobei ein gemessener Wert von dem Satz von Zellen der Referenzprobe unter dem Wert des Vektorkoeffizienten (θ) des entsprechenden Markers für alle der Marker liegt;
- einen Schritt der Bestimmung des kleinsten Werts von $s_j$, so dass $F(s) > 1 - a$; und
- einen Schritt der Bestimmung von Werten des Vektorkoeffizienten (Θ).

6. Verfahren nach Anspruch 5, **dadurch gekennzeichnet, dass** der Schritt der Bestimmung des Vektorkoeffizienten (Θ) eine Maximierung einer Menge von positiven Zellen in der zu analysierenden Probe unter Beachtung der gegebenen Rate von Falsch-Positiven (α) umfasst.

7. Verfahren nach einem der Ansprüche 1 bis 6, **dadurch gekennzeichnet, dass** der Vektorkoeffizient (Θ) ein Satz von Grenzwerten der Expression jedes der Marker ist, über jedem von denen eine Zelle als positiv erklärt wird.

8. Verfahren nach einem der Ansprüche 1 bis 7, **dadurch gekennzeichnet, dass** es einen Schritt der Analyse umfasst, in dem mindestens ein Marker, auf den mindestens eine Zelle positiv reagiert, identifiziert wird.

9. Verfahren nach einem der Ansprüche 1 bis 8, **dadurch gekennzeichnet, dass** es einen Schritt der Verifizierung durch Evaluierung einer Konfusionsmatrix umfasst.

**Claims**

1. Method for analysing cells of a sample reacting with at least one specific marker comprising:

- a step of providing a reference sample and a sample to be analysed;

the method being **characterized in that** it further comprises:

- a step of providing a set ($E^+$) of cells declared positive by an expert from among the cells of the sample to be analysed;
- a step of determining a vector coefficient ($\Theta$) from the sample to be analysed and from the set ($E^+$);
- a step of determining at least one set of positive cells in the reference sample as a function of the vector coefficient ($\Theta$); and
- a step of calculating a rate of false positives in the reference sample ($\alpha$) from the number of positive cells of the reference sample.

2. Method according to claim 1, **characterized in that** the step of determining the vector coefficient ($\Theta$) comprises a minimization of a quantity of false positives and a minimization of a quantity of false negatives in the sample to be analysed.

3. Method according to any one of claims 1 or 2, **characterized in that** the step of determining the vector coefficient ($\theta$) comprises:

- a step of defining, for each of the markers j, an $s_j$-quantile $y_j^s$, quantile of a cumulative distribution function $P_j^{test}$ associated with a smoothed probability distribution function $p_j^{test}$ determined by smoothing a marginal distribution of the $j^{th}$ marker in the sample to be analysed;
- a step of defining the set ($S^+$) of cells declared positive with respect to the $s_j$-quantile $y_j^s$ for each marker j in the sample to be analysed;
- a step of defining and determining a cardinal of the symmetrical difference between $S^+$ and $E^+$;
- a step of determining each of the largest values of the vector coefficient ($\theta$) of each of the markers by minimization of the cardinal with respect to the value $s_j$ of each marker j in the interval [0,1], for all the markers.

4. Method according to any one of claims 1 to 3, **characterized in that** it comprises:

- a step of providing the rate of false positives ($\alpha$) in the reference sample;
- a step of determining a vector coefficient ($\theta$) based on the reference sample and the rate of false positives ($\alpha$); and
- a step of determining at least one set ($S^+$) of positive cells in the sample to be analysed as a function of the vector coefficient ($\theta$).

5. Method for analysing cells of a sample reacting with at least one specific marker comprising:

- a step of providing a reference sample and a sample to be analysed;
- a step of providing a rate of false positives ($\alpha$) in the reference sample;
- a step of determining a vector coefficient ($\theta$) based on the reference sample and the rate of false positives ($\alpha$); and
- a step of determining at least one set ($S^+$) of positive cells in the sample to be analysed as a function of the vector coefficient ($\theta$);

**characterized in that** the step of determining a vector coefficient ($\theta$) comprises:

- a step of defining, for each of the markers j, an $s_j$-quantile $y_j^s$, quantile of a cumulative distribution function $P_j^{ref}$ associated with a smoothed probability distribution function $p_j^{ref}$ determined by smoothing a marginal distribution of the $j^{th}$ marker in the reference sample;
- a step of defining a function F(s) representing a rate of negative cells in the reference sample, increasing from [0,1] to [0,1], by $F(s) = \dfrac{card(VN^s)}{n}$, where $VN^s$ is defined by $VN^s = \{i=1,...,n$ such that $y_{ij}^{ref} < y_j^s$ for each $j=1,...,d\}$, the set of the cells of the reference sample a measured value of which is under the value of the vector

coefficient ($\theta$) of the corresponding marker for all the markers;
- a step of determining the smallest value of $s_j$ such that $F(s)>1\text{-}a;$ and
- a step of determining the values of the vector coefficient ($\theta$).

6. Method according to claim 5, **characterized in that** the step of determining the vector coefficient ($\theta$) comprises a maximization of a quantity of positive cells in the sample to be analysed respecting the given rate of false positives ($\alpha$).

7. Method according to any one of claims 1 to 6, **characterized in that** the vector coefficient ($\theta$) is a set of threshold values of the expression of each of the markers above each of which a cell is declared positive.

8. Method according to any one of claims 1 to 7, **characterized in that** it comprises an analysis step in which at least one marker to which at least one cell reacts positively is identified.

9. Method according to any one of claims 1 to 8, **characterized in that** it comprises a step of verification by evaluation of a confusion matrix.

**Fig. 1**

**Fig. 2**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014357505 A

**Littérature non-brevet citée dans la description**

- **D. T. TEACHEY et al.** Unmasking Evans syndrome: T-cell phenotype and apoptotic response reveal autoimmune lymphoproliferative syndrome (ALPS). *BLOOD,* 15 Mars 2005, vol. 105 (6), 2443-2448

- **KEELY G. MCDONALD et al.** CC Chemokine Receptor 6 Expression by B Lymphocytes Is Essential for the Development of Isolated Lymphoid Follicles. *THE AMERICAN JOURNAL OF PATHOLOGY,* 01 Avril 2007, vol. 170 (4), 1229-1240